# EUROPEAN PATENT APPLICATION

(11) **EP 1 145 636 A1**
(43) Date of publication of application: **17.10.2001**
(21) Application number: 00103456.0
(22) Date of filing: 29.02.2000
(51) Int. Cl.: A21C 15/00

(54) **Food product and method of manufacturing a food product**

(71) Applicant: Kraft Jacobs Suchard R & D, Inc., 81737 München (DE)
(72) Inventor: Kortum, Olaf, 85579 Neubiberg (DE)
(74) Representative: HOFFMANN - EITLE

(57) **Abstract**

A food product (10) comprises at least two components (14, 16) with different moisture and/or fat contents and at least one pouch (18, 24), at least partially enclosing one of the components (16), preferably a high-moisture component, and is characterized in that the open end (22) of the pouch (18) is turned back so as to form a cuff and so as to be exposed to the outside of the food product (10).

In a method of making a food product comprising at least two components with different moisture and/or fat contents and at least one pouch at least partially enclosing one of the components, preferably a high-moisture component, the open end of the pouch is turned back so as to form a cuff, the component is filled into the pouch, and the pouch is enclosed with another component so as to seal the pouch and expose the open end of the pouch to the outside of the food product.

## Description

### Field of the Invention

The invention relates to a food product according to the preamble of claim 1 and a method of manufacturing a food product.

Multi-component food products, in particular snacks comprising more than one component, are usually composed of components which differ with regard to their moisture and/or fat content. For example, a cracker, which is filled with a creamy cheese or the like, has a remarkably lower moisture content than the cheese filling. In order to prevent moisture migration, which endangers the crispy constitution of the component having the lower moisture content, it is necessary to provide a barrier between the components preventing moisture migration.

### Description of the Prior Art

A food product according to the preamble of claim 1 is known from EP 0 893 952 A1. In this known food product, the filling having a comparably high moisture content is contained in a bag, which is placed within the component having a lower moisture content, for example, halves of bread. When it is desired to consume this known food product, the bag is opened at one end and pulled out of the gap between the halves of bread from the other end, while the bag is adequately squeezed so that the filling is left behind between the halves of bread. However, the described procedure is inconvenient in that the filling will tend to gather at the end, where the bag is pulled out because the contents are squeezed during the pulling motion. Furthermore, the described moisture barrier between components of a food product is not suitable for snack products, which are intended to be consumed "on the go", because the bag containing the filling is difficult to remove.

### Summary of the Invention

In view of the drawbacks of the prior-art food products comprising components with different moisture and/or fat contents, it is an object underlying the invention to provide such a food product, in which the components can reliably be separated from each other by means of a barrier, which can, when the food product is to be consumed, easily be removed, while ensuring that the components of the food products remain at their intended location. Furthermore, it is another object underlying the invention to provide a method of making a food product with the above-described properties.

The object underlying the invention is on the one hand solved by means of the food product described in claim 1.

In accordance with the invention, the food product comprising at least two components with different moisture and/or fat contents further comprises at least one pouch or bag, which at least partially encloses one of the components. Preferably, a high-moisture component is contained in the bag or pouch. In order to allow easily removal of the pouch and at the same time ensure that the component contained therein is kept in its proper place, the pouch is arranged in a specific manner. That is, the open end of the pouch is turned back so as to form a cuff and so as to be exposed to the outside of the food product. In other words, the pouch or bag will have a comparably great length.

In this context, the length is defined to be perpendicular to the plane of the opening of the pouch. In order to allow the open end of the pouch to be turned back so as to extend beyond the closed end of the pouch, the length of the pouch or bag will have to be more than twice as long as the dimension of the filling to be contained therein in the longitudinal direction of the pouch. In the cuff formed by the turned-back open end of the pouch, the outer surface of the pouch is in contact with each other and forms a double-layer envelope for the filling contained therein.

As mentioned, the turned-back open end of the pouch will extend beyond the closed end of the pouch and to the outside of the food product. This feature allows the consumer to pull at the open end of the pouch, while holding the inventive food product at the component surrounding the filling contained in the pouch. When the consumer takes the open end of the pouch and starts to pull in a direction away from the food product, those portions of the pouch, which are immediately adjacent the filling, will gradually be turned back and rolled up to the outside, just like the open end of the pouch as well as a certain portion of the pouch is turned back before filling in the high moisture component of the food product.

In this way, the filling can reliably be deposited within the component surrounding it, without the need of squeezing the filling out of the bag. This is because, the filling does not have to move relative to that portion of the pouch, which directly encloses the filling. Rather, when the consumer pulls the open end of the pouch, which is located outside of the food product, in a direction away from the food product, the pouch is "peeled off" the filling, and the filling is safely deposited within the other food component surrounding it.

With regard to the open end of the cuff formed by the pouch, it should be noted that it is possible to seal this end by means of the pressure applied by the food component surrounding the filled pouch. However, other measures for sealing the open end of the cuff can be provided in connection with the present invention, as will be described in detail further below. With regard to the type of food products for which the invention provides its advantages, it should be noted that the invention is applicable to any food product which is constituted of a combination of components having properties which make it necessary or advantageous to separate the components from each other by means of a barrier, e.g. a bag or pouch. For example, the filling can be composed of fresh cheese, meat paste, a salad containing natural cheese pieces or sausage slices and mayonnaise or the like. These types of fillings contained in the pouch can be arranged within a dry or crispy cracker, preferably in the form of a roll, between two slices of bread or a similar cover. In a case, in which the filling is to be deposited between slices of bread, the pouch will have a flat and rectangular shape corresponding to the form of the slices of bread. Furthermore, the invention allows ice-cream to be deposited within a waffle or a creamy filling within a cake or cookie. However, the invention can also be used in the pharmaceutical industry and any other field, in which components with different properties have to be kept separate from each other by means of a barrier which should be readily removable from the product.

Preferred embodiments of the invention are described in the dependent claims.

The open end of the cuff formed by the turned-back pouch can be conveniently sealed, if the open end of the cuff is also exposed to the outside of the food product. In this manner, the pouch will generally be formed noticeably longer than the food product contained therein. Thus, a double-layered envelope can be created, both ends of which are exposed to the outside of the food product. With regard to the open end of the cuff, this structure allows an easy verification as to whether the cuff is reliably closed, because it can be checked visually whether the surrounding food component is arranged so as to close the cuff. When the pouch is withdrawn from the food product, the exposed open end of the cuff will also be pulled through the product. The open end of the cuff, which is exposed to the outside of the food product, can be closed preferably by a closure member. Such a closure member can easily be removed when the product is to be consumed. The closure member could be made of an easy-opening rubber wire or a special plastic clamp. The closure member is easily accessible, and allows easy opening of the cuff in order to remove the pouch. Furthermore, the manufacture of the inventive food product is remarkably facilitated, because a single pouch is sufficient.

For sealing the cuff formed by the turned-back pouch, a second pouch is advantageously provided, the first, open end of which is sealingly attached to the open end of the cuff. The first and second pouch co-operate to enclose the component filled in the pouch. It should be noted that the second pouch may be a tubular pouch, in other words a hose open at both ends. The end of the second pouch, which is not attached to the first pouch can, as mentioned above with regard to the open end of the cuff, be sealingly closed by means of pressure applied by the food component surrounding the pouches. In this case, the outer layer of the first pouch will, when it is withdrawn from the gap between the filling and the surrounding food component, also withdraw the second pouch by sliding it over the inner portion of the first pouch in accordance with the withdrawing motion of the outer layer of the first pouch.

When a second pouch is used in order to seal the open end of the cuff formed by the first pouch, it is preferred to seal the second end of the second pouch, which is, as mentioned above, preferably open, for example in order to allow filling of the pouches. This sealing is preferably conducted by means of inductive sealing. When the outside, second end of the second pouch is sealed, it will be arranged so as to be exposed to the outside of the food product, e.g. for 2 cm. This is necessary, because the sealed end of the second pouch must be opened, by means of scissors or tearing a perforated opening line in order to allow the second pouch, which is attached to the first pouch, to be removed along the first pouch. Naturally, the first and/or second pouch should be made of materials, preferably plastic, which are food-compatible.

Removal of the first and/or second pouch can be made easier if elastic material is used for the first pouch and, if present, the second pouch. Such a material allows stretching of the pouch(es) during or before filling, so that a certain tension is created within the pouch(es) after closing the same. Since the pouch(es) can thus be arranged in the food product under tension, removal of the pouch(es) will be facilitated, because immediately after opening, the pouch(es) will contract and thus automatically be partially pulled through the surrounding component. The final pulling out and removal of the pouch(es) is significantly eased. The opening of the pouch(es) can either be effected by opening the closed end of the second pouch, or by removing a closure member sealing the exposed end of the cuff formed by the first pouch.

With the above-described embodiment, the pouch(es) provided under tension can be held by tension holders. Such a tension holder could co-operate with an outer pouch clamp. As mentioned, withdrawal of the pouch(es) commences automatically because the pouch material relaxes and becomes slack after opening.

With regard to the interaction between the filling and the inner surface of the first and/or second pouch, remarkable advantages are obtained, when the inner surface of the first and/or second pouch is provided with a structure preventing sticking of the component contained in the pouches at the pouch. Since the pouch has to be taken off the filling, which is deposited between the surrounding food component, the mentioned feature will prevent the filling from being removed along with the pouch, which is undesirable. Preferably, a so-called lotus-effect structure is used for the inner surface of the pouch, which is known to the persons skilled in the art as a surface structure preventing any sticking of any material adjacent the surface.

As outlined above, when the pouch is removed, the outside surfaces of that portion of the pouch, which is turned back over the remainder of the pouch, has to move relative to the outer surface of the remainder of the pouch. In order to allow smooth removal, the outside surface of the first pouch is provided with good sliding properties. In this manner, smooth removal of the pouch is aided. It should be noted that a small amount of oil can be applied to the outside surfaces in order to ensure sufficient sliding properties between the mentioned surfaces. The reliable, easy and convenient removal of the barrier pouch between the two food components provides remarkable advantages to this invention. Said removal is mainly driven by the pouch material and their surface properties. The outsides of the pouch surface which are touching each other, after the pouch is turned, should be designed to be perfectly slidable. Slidability is optimal when the measured friction forces tend towards zero. Friction forces can be further reduced by incorporating special food grade lubricants such as vegetable oil placed in between the sliding surfaces. The pulling force needed to remove the pouch at the exposed cuff is dependent on these friction forces. Further parameters affecting the pulling force are the adhesion forces of the food components in contact with the inside of the pouch. These forces can be reduced to a minimum by designing the inside of the pouch surface with a special "Lotus effect" structure, as mentioned above.

With regard to convenient removal of the pouch, it is preferred that an additional member is provided, which comprises a hole, through which the open end of the first pouch extends. This member can, for example, be constituted by a small piece of carton or the like. This member is advantageously located near the food product and ensures that the pouch passes through the hole of the member and is securely removed from the food product.

Furthermore, in order to facilitate handling and presentation of the inventive food product, it is preferred that it is contained in an outer package.

Opening of the outer package will be remarkably facilitated if the outer package comprises at least one predetermined opening line. Preferably, the opening line is perforated in order to allow easy opening of the outer package.

The above-described predetermined opening line can advantageously be combined with a sealed second pouch, which cooperates with the first pouch in enclosing the filling, by positioning the opening line of the outer package in association with the sealed end of the second pouch so that the second pouch is opened during opening of the outer package along the described opening line. It is to be noted that the further opening line can be provided in order to expose the turned-back end of the first pouch so that it can easily be grasped in order to remove the first pouch.

According to another aspect of the invention, a method of making a food product comprising at least two components of different properties and a pouch at least partially enclosing one of the components is provided. The inventive method comprises the following steps. The open end of the pouch is turned back so as to form a cuff. One food component is filled into the pouch, and the pouch is enclosed with another food component so as to seal the pouch and expose the open end of the first pouch to the outside of the food product. As described above with regard to the inventive food product, the described method allows the production of a food product, in which components having remarkably different properties are sealingly separated from each other. However, by means of turning back the open end of the pouch and exposing the open end to the outside of the food product, quick and easy removal of the pouch can be guaranteed in order to combine the components of the inventive food product with each other.

Preferred embodiments of the inventive method are described in the further claims.

In accordance with the above-described first embodiment of the invention, the pouch can be enclosed such that the open end of the cuff formed by the turned-back pouch is exposed to the outside, so that reliable sealing of the first pouch can be easily checked and manufacture is facilitated. The exposed open end of the cuff is closed preferably by a particular closure member before enclosing the pouch with the surrounding food component.

In line with the above-described arrangement making use of a second pouch sealing the open end of the cuff, preferably a second pouch is sealingly attached to the open end of the cuff.

In this case, the pouch is preferably of tubular shape and is attached to the first pouch before the filling is introduced, and is sealed after introduction of the filling with the sealed end exposed to the outside of the food product.

With regard to the method of attaching the second pouch to the first pouch, it has been found advantageous to glue or weld the second pouch to the first pouch. Furthermore, an adhesive tape can be used for this purpose.

In order to produce a food product from which the pouch(es) can be easily removed, it is preferred in connection with the inventive method to stretch the first and/or second pouch, which are made of elastic material, before these are enclosed by the surrounding food component. In this manner, the pouch(es) are arranged in the food component under tension, so that removal from the product is initiated by the contraction of the pouch(es) when these relax and become slack after opening.

In this case, it is furthermore preferred to apply a tension holder in order to maintain the stretched state of the pouch(es) within the final product.

For the inventive method of producing a multi-component food product, it is desired to prevent deformation of the filling, before it is placed within the other food component. For this purpose, the filled pouch or pouches are preferably placed in a holder.

As mentioned above, removal of the pouch is remarkably facilitated if an additional member is provided, which comprises a hole, through which the open end of the first pouch extends. Accordingly, in connection with the inventive method, the open end of the first pouch is drawn through the hole formed in the additional member, in order to provide an arrangement allowing easy removal of the pouch.

Preferably, the food product produced by the inventive method is additionally placed in an outer package in order to provide protection.

Opening of the outer package will advantageously be facilitated if at least one opening line, preferably a perforation, is formed in the outer package.

Finally, as mentioned above, opening of the outer package can advantageously be combined with the first step of removing the pouches, by forming an opening line of the outer package so as to be associated with the sealed end of the second pouch. In this way, the outer package and the second pouch can be opened simultaneously so that the food product can be removed from the outer package and the pouch containing the filling can be removed from the food product by pulling at the exposed open end of the turned-back first pouch.

### Brief Description of the Drawings

Further features and advantages of the invention will be apparent from the accompanying drawings, which show a nonlimiting embodiment of the inventive products.
- Fig. 1: is a sectional view of a first embodiment of the inventive food product;
- Fig. 2: is a front view thereof;
- Fig. 3: is a sectional view of a second embodiment of the inventive food product; and
- Fig. 4: is a front view thereof.

### Description of the Preferred Embodiments of the Invention

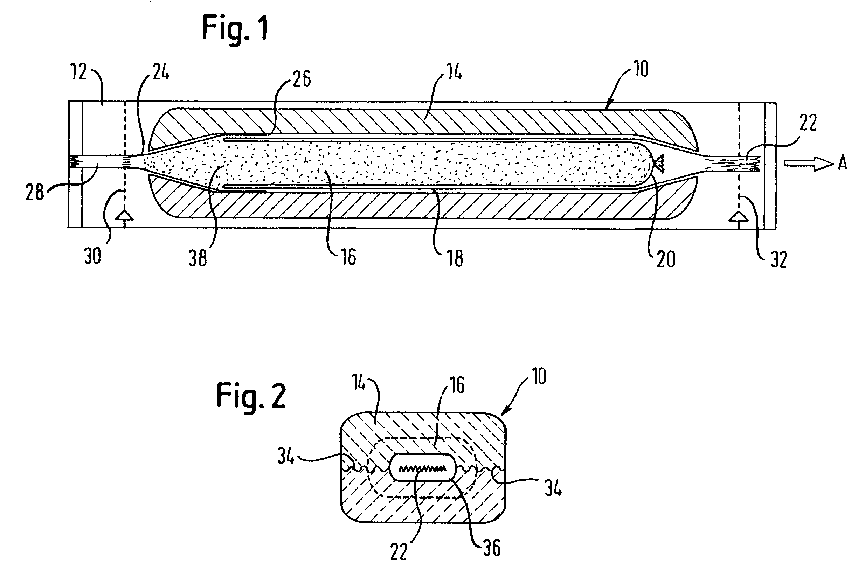

As can be taken from Fig. 1, the inventive food product 10 is contained in an outer package 12. In the embodiment shown in the drawing, the inventive food product consists of a cracker roll 14, which is filled with creamy cheese 16. The cheese 16 is contained in a first pouch 18 comprising a first, closed end 20, which is located at the right side in the drawing of Fig. 1. The second, open end 22 of the first pouch 18 is turned back over the outside of the pouch 18 so as to form a double-layered pouch constituting a cuff.

At the open end 38 of the cuff thus formed, a second pouch 24 is attached to the cuff formed by the first pouch 18. The first, open end 26 is in the case shown in the drawing sealingly attached to the open end 38 of the cuff. Furthermore, the second (left) end of the second tubular pouch 24 is sealed in the region 28 and exposed to the outside of the food product 10. Also the open end 22 of the first pouch 18 is exposed to the outside. As mentioned above, the depicted embodiment of the inventive food product 10 is contained in an outer package 12, which is, in this case, formed as a so-called flow package. The outer package 12 comprises in the shown embodiment at least one opening line 30 in the form of a perforation which is arranged with regard to the sealed end of the second pouch such that the outer package 12 and the second pouch 24 can be simultaneously opened by tearing or cutting the opening line 30. Thereafter, the food product 10 can be removed from the package 12.

In the embodiment shown in Fig. 1, the package 12 comprises a second opening line 32 in the vicinity of the exposed open end 22 of the first pouch 18. In this case, the open end 22 of the first pouch 18 can be grasped as soon as the outer package 22 is opened along the opening line 32. Thereafter, the food product 10, which will in this case still be contained in the outer package 12, which has been opened at both ends, will be held in the one hand, and the open end 22 of the first pouch 18 is pulled in the direction of arrow A with the other hand. This movement will cause the outer, turned-back portion of the pouch 18 to slide in the direction of arrow A with regard to the inner portion of the pouch 18 containing the filling 16. As can be seen, both the filling 16 and the inner portion of the pouch 18 are not moved relative to each other. Rather, the inner portion of the pouch 18 is continuously turned back to the outside of the pouch, just like the open end 22 of the pouch was turned back over the remainder of the pouch, before the pouch was filled.

This action will gradually remove the entire pouch 18 from the filling 16, which does not have to be moved, and which, particularly, does not have to be squeezed out of the pouch. Since the second pouch 24 is attached to the outside of the cuff formed by the first pouch 18, the second pouch 24 is also slid over the inner portion of the pouch 18 and removed from the food product along with the first pouch 18. Removal of the pouches is completed, when the closed end 20 of the pouch 18 is the only portion of the pouch 18, which is still located within the inventive food product 10 and is also removed by continuously pulling the pouch 18 in the direction of arrow A. As can be seen, the pouches tightly enclose the filling 16 in order to prevent any moisture migration or other deterioration of the other food components, as well as spoiling of the filling 16. When it is intended to consume the inventive food product, the pouches 18, 24 can easily be removed by the above-described procedure.

The following dimensions were used with regard to the depicted embodiment of the invention. The first pouch 18 was approximately 22 to 25 cm long and 1 cm in diameter. The open end 22 was turned back so that the open end 22 extended beyond the closed end 20 for approximately 2 cm. In this way, a cuff of approximately 10 cm is obtained. The second, tubular pouch 24 had a length of 5 cm and a diameter of 1 cm. The region, in which the cuff formed by the first pouch 18 and the open end of the second pouch 24 overlapped was about 1 cm long. The outer cracker roll 14 of the shown embodiment had a diameter of approximately 1,2 cm and a length of 12 cm.

For manufacturing the inventive food product, the first pouch 18 is turned back so as to form a cuff. On a ring traveler, the cuff can be introduced into the second pouch 24, which is provided with a strip of adhesive tape at its open end. In the ring traveler, the desired firm attachment can be obtained. In particular, the centrifugal force of the ring traveler can advantageously be used during filling of the combination of the first and second pouch. Thereafter, the second pouch 24 will be sealed at the free open end. If the filling is warm, the filled pouches can be cooled afterwards in a stream of cold air. In order to avoid deformation of the filling, the filled pouches should then be arranged in a holder, which is then brought to a position to combine the filled pouches with another food component. The further food component should advantageously be arranged about the pouches so as to tightly enclose the pouches and at the same time expose the free ends of the first and second pouch to the outside.

In connection with manufacturing the inventive food product, the invention also provides a manufacturing apparatus comprising a device for turning back the open end of the first pouch 18 and extending it beyond the closed end of the pouch 18. Furthermore, a device for arranging a second food component around the pouch, which has been filled, is provided. If, according to a preferred embodiment, a second pouch is used in order to tightly seal the open end of the cuff formed by the first pouch, a ring traveler can be provided within the manufacturing apparatus in order to attach the second pouch 24 to the first pouch 18.

As can additionally be taken from Fig. 2, which shows the food product 10 removed from the package 12, the outer food component 14, in the depicted case a cracker roll, fully encloses the filling 16. However, as indicated by the dividing lines 34, the outer food component 14 may be composed of two halves. In particular, these two halves could also be constituted by two slices of bread. In order to allow easy removal of the pouches enclosing the filling 16, while simultaneously keeping the filling 16 in its place within the outer food component 14, the open end 22 of the first pouch 18 extends through a relatively narrow opening 36 of the outer food component 14 to the outside of the food component. In this way, the pouches 16, 24 can readily be removed from the food product 10 by pulling the open end 22 of the first pouch 18 in the direction of the viewer according to Fig. 2. This movement takes the pouches 18, 24 off the filling 16 without the need of moving these relative to each other so that the filling 16 can readily be deposited within the inventive food product 10.

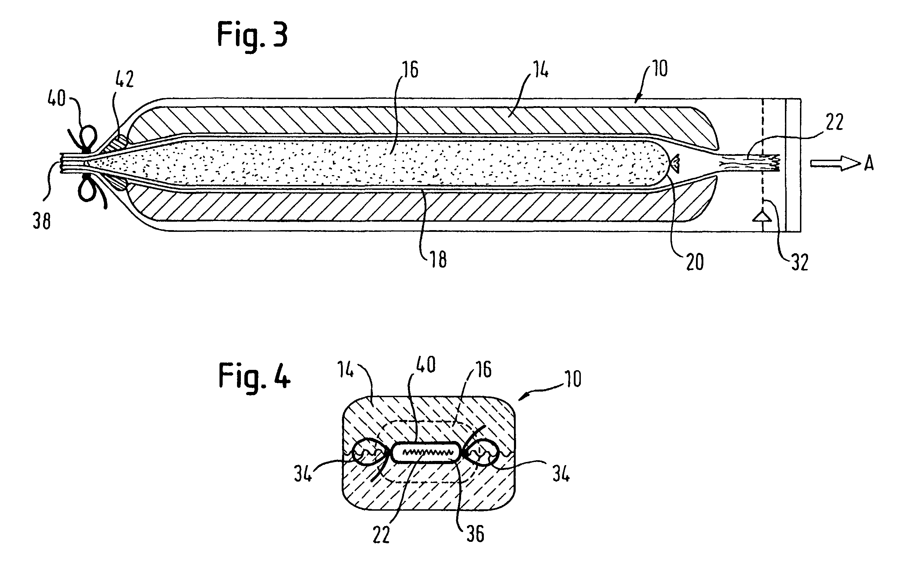

As can be taken from Fig. 3, the second embodiment of the invention corresponds to the first embodiment with regard to turning back the open end 22 of the first pouch 18 in order to form a cuff. However, the open end 38 of the cuff is also exposed to the outside of the food product 10. Furthermore, in the depicted case, the open end 38 of the cuff is, moreover, exposed to the outside of the outer package 12, so that a plastic or rubber wire 40, provided as a closure member to the open end 38, is accessible from the outside. When the food product 10 is to be consumed, the closure member 40 can be removed from the outside, and the package can be broken along the opening line 32. Subsequently, the first pouch 18 can be removed from the food product 10 by pulling the open end 22 of the first pouch 18.

Furthermore, according to the embodiment shown in Fig. 3, a tension holder 42 is applied to the open end 38 of the cuff formed by the turned-back first pouch 18. This tension holder 42 generally prevents the first pouch 18, which is in this case made of elastic material and provided within the food product 10 under tension, from slipping through the outer food component 14. However, as soon as the closure member 40 is removed, which will preferably also cause the removal of the tension holder 42, the first pouch 18 will contract so that the removal of the first pouch 18 from the food product 10 is initiated. This removal can easily be completed by the consumer by pulling the open end 22 of the first pouch 18.

Fig. 4 shows a front view of the embodiment of Fig. 3, from which the preferred shape of the closure member 40 becomes apparent. The closure member 40 is preferably made of a plastic or rubber wire, which is provided under tension and bound like a slip-knot. Such a slip-knot can easily be opened by pulling at one of the strings.

## Claims

1. A food product (10) comprising at least two components (14, 16) with different moisture and/or fat contents and at least one pouch (18, 24), at least partially enclosing one of the components (16), preferably a high-moisture component,
**characterized in that**
the open end (22) of the pouch (18) is turned back so as to form a cuff and so as to be exposed to the outside of the food product (10).

2. Food product according to claim 1,
**characterized in that**
the open end (38) of the cuff is exposed to the outside of the food product (10), and preferably closed by a closure member (40).

3. Food product according to claim 1,
**characterized in that**
a second pouch (24) is provided, the first, open end (26) of which is sealingly attached to the open end (38) of the cuff formed by the first pouch (18) so as to enclose the component (16).

4. Food product according to claim 3,
**characterized in that**
the second end (28) of the second pouch (24) is sealed and exposed to the outside of the food product (10).

5. Food product according to any of the preceding claims,
**characterized in that**
the first (18) and/or second pouch (24) is made of elastic material and arranged in the food product (10) under tension.

6. Food product according to claim 5,
**characterized in that**
the first (18) and/or second pouch (24) is held by a tension holder.

7. Food product according to any of the preceding claims,
**characterized in that**
the inside of the first (18) and/or second pouch (24) is provided with a structure, preferably a lotus-effect structure, preventing sticking of the component (16) enclosed by the pouch (18, 24) at the pouch (18, 24).

8. Food product according to any of the preceding claims,
**characterized in that**
the outside of the first pouch (18) is provided with good sliding properties.

9. Food product according to any of the preceding claims,
**characterized in that**
an additional member comprising a hole, through which the open end (22) of the first pouch (18) extends, is provided.

10. Food product according to any of the preceding claims,
**characterized in that**
the food product (10) is contained in an outer package (12).

11. Food product according to claim 10,
**characterized in that**
the outer package (12) comprises at least one predetermined opening line (30, 32), which is preferably a perforated line.

12. Food product according to claims 11 and 4,
**characterized in that**
the opening line (30) is associated with the closed end (28) of the second pouch (24) such that the second pouch (24) is opened when the outer package (12) is opened along the opening line (30).

13. A method of making a food product comprising at least two components with different moisture and/or fat contents and at least one pouch at least partially enclosing one of the components, preferably a high-moisture component, the method comprising the following steps:
- turning back the open end of the pouch so as to form a cuff,
- filling the component into the pouch, and
- enclosing the pouch with another component so as to seal the pouch and expose the open end of the pouch to the outside of the food product.

14. A method of making a food product according to claim 13,
**characterized in that**
the pouch is enclosed such that the open end of the cuff formed by the turned-back pouch is exposed to the outside of the food product and is preferably closed by a closure member before enclosing the pouch with another component.

15. Method of making a food product according to claim 13,
**characterized in that**
a second pouch is sealingly attached to the open end of the cuff formed by the first pouch with its first, open end.

16. Method of making a food product according to claim 15
**characterized in that**
the second pouch is a tubular pouch and is attached to the first pouch before filling of the component and is sealed after filling of the component with the sealed end exposed to the outside of the food product.

17. Method of making a food product according to claim 15 or 16,
**characterized in that**
the second pouch is glued or welded to the first pouch or attached to the first pouch by means of an adhesive tape.

18. Method of making a food product according to any of the claims 13 to 17,
**characterized in that**
the first and/or second pouch is stretched before enclosing it with another component.

19. Method of making a food product according to claim 18,
**characterized in that**
a tension holder is applied to the stretched first and/or second pouch.

20. Method of making a food product according to any of claims 13 to 19,
**characterized in that**
the filled pouch or pouches are placed in a holder so as to prevent deformation of the filling.

21. Method of making a food product according to any of claims 13 to 20,
**characterized in that**
the open end of the first pouch is drawn through a hole formed in an additional member.

22. Method of making a food product according to any of claims 13 to 21,
**characterized in that**
the food product is placed in an outer package.

23. Method of making a food product according to claim 22,
**characterized in that**
at least one opening line, preferably a perforation is formed in the outer package.

24. Method of making a food product according to claim 23 and claim 16 or 17,
**characterized in that**
an opening line is formed so as to be associated with the sealed end of the second pouch.
